Europäisches Patentamt

**European Patent Office**

Office européen des brevets

(19)

(11) Publication number:

# 0 008 297
B1

(12) **EUROPEAN PATENT SPECIFICATION**

(45) Date of publication of patent specification: **23.02.83**

(51) Int. Cl.³: **F 16 F 9/04, B 60 G 11/26**

(21) Application number: **79900089.8**

(22) Date of filing: **22.11.78**

(86) International application number:
**PCT/US78/00172**

(87) International publication number:
**WO 79/00411 12.07.79 Gazette 79/14**

(54) **AIR SPRING ASSEMBLY.**

(30) Priority: **20.12.77 US 862435**

(43) Date of publication of application:
**20.02.80 Bulletin 80/4**

(45) Publication of the grant of the patent:
**23.02.83 Bulletin 83/8**

(84) Designated Contracting States:
**GB**

(56) References cited:
FR - A - 1 220 987
FR - A - 1 290 090
FR - A - 1 482 824
GB - A - 1 231 766
GB - A - 1 248 025
GB - A - 1 286 752
US - A - 2 956 797
US - A - 3 010 715
US - A - 3 028 174
US - A - 3 032 350
US - A - 3 043 582
US - A - 3 078 085

(73) Proprietor: **LEAR SIEGLER, INC.**
**3171 South Bundy Drive**
**Santa Monica, CA 90406 (US)**

(72) Inventor: **PIERCE, William, Charles**
**221 North Stewart**
**Muskegon, MI 49442 (US)**

(74) Representative: **Miller, Joseph et al,**
**J. MILLER & CO. Lincoln House 296-302 High**
**Holborn**
**London WC1V 7JH (GB)**

(56) References cited:
US - A - 3 351 337
US - A - 3 438 309
US - A - 3 475 015
US - A - 3 549 142

US, N, "GYRL-1100", Assembly Part No.
566-22-2-005
US., N, "GYRL-1100", Assembly Part No.
566-22-2-008

Courier Press, Leamington Spa, England

# 0 008 297

## Air spring assembly

### Technical Field

This invention relates to air springs. In one of its aspects, the invention relates to an air spring of the rolling lobe type wherein flexible sleeves are expanded to the maximum diameter under load and deflections due to bumps and the like are taken up through rolling of an end of the sleeve on a piston or pedestal which telescopes within the sleeve.

### Background Art

Air springs are well known in suspension systems for vehicles, especially heavy duty trucks and trailers. One particular type of air spring, known as the "rolling lobe" air spring, is disclosed in the Hirtreiter. U.S. patent No. 3,043,582 issued July 10, 1962. This type of an air spring includes an expandable fabric sleeve which is expanded to a predetermined maximum diameter under load and a piston or pedestal, which is secured to one end (usually the bottom end) of the sleeve, telescopes within the sleeve. The sleeve is made of a plurality of ply of rubber and crossed sets of inextensible cords which run the length of the sleeve but are at an angle with respect to the axis of the sleeve. As the sleeve is expanded, the crossed sets of cords pantograph to an equilibrium angle of about 54°.

Normally, under load, the sleeve is pressurized to a pressure of, for example, 30—50 psig (207—245 Kpa) so that the load is supported through the sleeve assembly. A portion of the sleeve expands to the equilibrium angle of the cords and the piston or pedestal telescopes into an end of the sleeve, thereby forming a lobe which rolls on the pedestal when the spring is compressed. In this type of air spring, the spring rate, i.e. the change in the load per unit of deflection, is controlled by the shape of the pedestal. Hirtreiter discloses, for example, pedestals which have cylindrical sides, inverted frustro-conical shapes and hourglass shapes.

In the air spring assemblies incorporating those pedestals which have a decreasing diameter lobe rolling surface, the effective diameter of the air spring decreases under compression, thereby providing a lower spring rate and a smooth ride. Generally, the lower the spring rate, the softer the ride. Thus, the softest ride would be achieved by a spring having a very low spring rate at design load. Spring rates at or near 0, or even negative spring rates, are theoretically possible but are not preferred because of the control systems which are used to pressurize the springs to maintain a design height.

Certain rolling lobe air springs (for example GYRL 1100, assembly part No. 566—22—2—005) manufactured and sold by Goodyear Tire and Rubber Company of Akron, Ohio, U.S.A., have hourglass type of pedestals through which the effective area of the spring is decreased during compression. Further, the pedestal is open to the interior of the cylinder to provide an additional volume for the air spring. However, the spring rate is fairly high, for example, 1275 pounds per inch (22.30 KN/m) at 7200 pounds (3260 kg), and the load to spring rate ratio is about 5.6 in. (14. 2 cm). Generally it is desirable to achieve a much lower spring rate, generally in the range of 100 to 300 pounds per in. (17.5—52.5 KN/m) and to achieve higher loads to achieve optimum operating conditions in heavy duty trailer and truck tractors. Heretofore, spring rates and ratios of load to spring rate in these ranges for heavier loads have not been obtained and were thought to be unattainable, although theoretically possible for rolling lobe air springs.

Another type of air spring purported to attain a minimum spring rate is a reversible diaphragm air spring disclosed in the U.S. patent to Bank, 3,078,085, issued February 19, 1963. This type of air spring has a reservoir at the top and a flexible sleeve secured at an upper portion portion to the reservoir and at a lower portion to an hour-glass shaped pedestal. The lower portion of the sleeve is of a smaller diameter than the upper portion so that it telescopes therethrough during normal operation. The maximum inward convergence angle of the Bank pedestal is purported to be 19°. However, the effective area of the spring decreases during deflection at design loads so that a relatively low spring rate is achieved. However, the lobe of the Bank sleeve changes in size under compression because the sleeve is not fully expanded under load. The Bank spring is made for a relatively small load, for example, 1000 to 2000 pound (453.6—907.2 Kg) range as would be provided in automobiles.

In order to achieve the higher loading capabilities with the Bank type of spring, the size of the spring would have to be increased so that the volume is also increased. However, the volume of the spring has profound effects on the spring rate at higher loads and thus merely increasing proportions of the Bank spring will not necessarily result in the attainment of the same characteristics as in the smaller proportioned spring.

### Disclosure of Invention

I have now discovered an air spring of the rolling lobe type which is adapted for heavy loads, for example, 5000 to 10,000 pounds (2268—4536 Kg) but nevertheless achieves spring rates in the range of 100 to 300 pounds per inch (17.5—52.5 KN/m) with load-to-spring rate ratios in the range of 20 to 120 inches (50—300 cm) for these loads.

The invention is applicable to the rolling lobe type of air spring, wherein a hollow elastic sleeve is maintained at a substantially constant diameter at a design load under jounce and rebound, having

2

means for securing an upper end of the sleeve to a vehicle frame; a hollow piston adapted to be secured to a vehicle axle to mount a lower end of the sleeve to provide an outer surface on which the lower end of the sleeve rolls during jounce and rebound; the hollow piston having an axis along which the piston moves during jounce and rebound of the spring; means for securing the sleeve to an upper portion of the piston; and means to provide open communication between the interior of the sleeve and the interior of the piston whereby the interior of the piston provides a reservoir for the air spring, the exterior surface of the piston having an outwardly-extending top surface joining a relatively large radius downwardly curved surface on which the lobe of the sleeve rests during normal loading, and an inverted frusto-conical surface extending downwardly from the downwardly curved surface to provide an area of increasingly reduced diameter for the rolling lobe of the sleeve during jounce.

According to the present invention there is provided an air spring of the type described above characterised in that: the angle of an element of the frusto-conical surface with respect to the axis of the piston is in the range 20—23°; the design height of the air spring is in the range of 28—33 cm; the piston height is substantially 13 cm.; and the volume of the piston and sleeve under load is in the range of 13,900—24,600 cu. cm., so that the spring rate is in the range of 17.5 KN/m—52.5 KN/m at loads above 2268 kg.

The piston may further comprise an outwardly flared surface adjoining the bottom of the frusto-conical surface and providing an area of larger diameter to increase the effective area of the air spring and retard further deflection thereof as the rolling lobe in deflection reaches the outwardly flared surface.

A plate may be secured to an upper portion of the piston, an opening in the plate providing communication between the interior of the sleeve and the piston reservoir and a resilient bumper may be secured to the upper sleeve end securing means and be adapted to strike the plate at extreme deflection positions of the air spring.

Preferably the volume of the piston reservoir is in excess of 1639 cu. cm.

Preferably the volume of the interior of the piston and sleeve under load is substantially 16,390 cu. cm.

The piston shape, the volume of the sleeve and piston reservoir may be such that the ratio of load to spring rate for the air is above 50.8 cm. for loads in excess of 2268 Kg.

The piston diameter at the upper portion thereof may be in the range 24 to 28 cm, and preferably substantially 25 cm, and the hollow elastic sleeve may have a maximum diameter in excess of 30 cm, and preferably in the range 33 to 33.7 cm.

The design height of the air spring may be substantially 30 cm. The hollow elastic sleeve may be made from a plurality of ply of elastic material with sets of crossed inextensible cords which limit the expansion of the sleeve through pantographing movement to an equilibrium angle at a design load. Alternatively, the hollow elastic sleeve may be made from expandable rubber which is otherwise restrained at a maximum diameter, as for example, by a metal sleeve.

Brief Description of the Drawings

The invention will now be described with reference to the accompanying drawings in which:—

Figure 1 is a side elevational view in section of an air spring assembly according to the invention shown under normal loading conditions,

Figure 2 is a view similar to Figure 1 showing the air spring under jounce condition;

Figure 3 is a composite graph showing the relationship between deflection and the effective area and between deflection and load at various pressures.

Best Mode for Carrying out the Invention

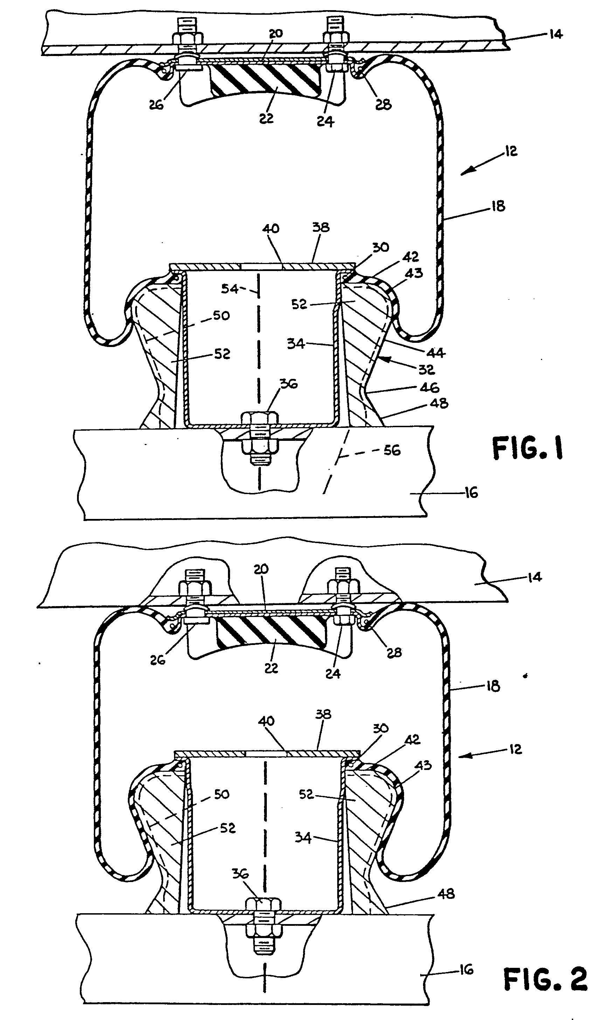

Referring now to the drawings, and to Figure 1 in particular, there is shown an air spring assembly 12 secured at an upper portion to a vehicle frame 14 and at a lower portion to a vehicle axle assembly or trailing arm 16. The air spring assembly comprises a rubber flexible sleeve 18 secured at an upper portion thereof to an upper retainer 20 and bumper 22 and at a lower portion to a piston member 32. Bolts 24 and 26 secure the air spring assembly through the upper retainer 20 to the vehicle frame 14.

The rubber flexible sleeve is tubular shaped and is constructed from laminated rubberized fabric having inextensible cords crossed with respect to each other in the manner described in the U.S patent to Hirtreiter, 3,043,582 (issued July 10, 1962). The inextensible elements are positioned at an angle of about 30° with respect to the axis of the tubular flexible sleeve 18 in unexpanded condition such that, upon expansion of the flexible sleeve 18, the angle between the cords and the axis of the flexible sleeve expands to about 54°. In this condition, the flexible sleeve 18 achieves its maximum diameter. The sleeve 18, itself, is conventional and sleeves of this nature are commercially available from Goodyear Tire & Rubber Co.

At an upper portion, the rubber flexible sleeve 18 has an annular wire ring 28 through which it is secured to the retainer 20. In like manner, a lower wire ring 30 at the lower portion of the flexible sleeve 18 is provided for securing the sleeve 18 to the piston 32 between a reservoir can 34 and the piston 32. As illustrated in Figure 1, the upper wire ring 28 has a greater diameter than the lower wire ring 30. The reservoir can 34 is secured to the axle 16 through a bolt 36 and provides a sealed interior chamber for the piston 32. A sealing compound or sealing washer (not shown) is provided for bolt 36 to maintain the reservoir can 34 air tight. A retainer plate 38 having an opening 40 is secured to the top of the reservoir can 34 through welding or other suitable fasteners to provide an abutment surface for bumper 22 under very high jounce conditions.

The piston 32 has a shape which is very important to the operating characteristics of the air spring assembly. It has an outwardly extending top portion 42 having a relatively large radius, downwardly curved surface 43 which smoothly joins an inverted frustro-conical surface 44. An outwardly extending lower portion 48 joins the inwardly directed surface 44 at a minimum diametrical area 46. As seen in Figure 1, the diameter of area 46 is greater than that of the lower ring 30 but significantly less than that of the outer portion of surface 43.

The outer surfaces of the piston 32 are smooth and circular in any horizontal section taken therethrough. The piston is conveniently cast from any suitable castable material and the outer surface can be machined smooth, if desirable. The casting is desirably hollow, having an interior surface 50 shown in phantom lines in Figures 1 and 2, and has strenthening ribs 52 spaced at appropriate locations within the casting.

The operation of the air spring under jounce, i.e. when the vehicle hits a bump, is illustrated in Figure 2. The lower portion of the flexible member 18 will roll along the surface 44, thereby decreasing slightly the effective area within the spring. In addition, the piston is dimensioned so that the spring rate is substantially flat, i.e. in the range of 100—300 lbs/in. (17.5—52.5 KN/m) during the roll of the flexible member along the surface 44. However, when the flexible member 18 reaches the minimum diametrical area 46, the effective area of the spring will increase rather quickly, thereby increasing the spring rate to stop the jounce before the spring "bottoms out" on the bumper 22.

The angle of surface 44 with respect to the axis of the piston is quite important with respect to the operation of the spring. This angle is measured by taking a section through the central axis of the piston 32 which is shown as phantom line 54 in Figure 1. The central axis 54 is perpendicular to the base of piston 32. The intersection of the plane taken through the central axis 54 with the surface 44 forms an element of surface 44. An extension of an element is shown as phantom line 56 in Fig. 1. Thus, the angle between the surface 44 and the axis of the piston 32 is measured between phantom lines 54 and 56. This angle is in the range 20—23° and is preferably about 23°.

The diameter of the piston with respect to the air spring is also of some considerable significance. The piston diameter must be small enough to permit rolling of the lobe on the relatively large return angle frustro-conical surface 44 without collapsing of the lobe. Typically, for a 13-in. (33.0 cm.) diameter air spring, the diametrical difference between the air spring ID and the piston OD must be at least 3 in. (7.6 cm) and preferably about 3.4 in. (8.6 cm.). Daimetrical differences would be slightly greater for larger air springs and slightly smaller for smaller air springs.

An air spring according to the invention was constructed with the following approximate dimensions:

Sleeve — Goodyear sleeve part No. *AS4—26—3—017*
    Max. diam. 336.6 mm (13.25 in.)
Piston
    Height — 132.0 mm (5.20 in.)
    Maximum diameter at Curved surface 43 — 244.0 mm (9.61 in.)
    Radius of curved surface — 27.0 mm (1.06 in.)
    Height of area 46 above base — 33.0 mm (1.30 in.)
    Radius of surface at area 46 — 24.0 mm (0.94 in.)
    Volume from top down to area 46 — 1968 cm³ (120 in.³)
Air spring assembly
    Design height — 304.8 mm (12 in.)
    Diam. of sleeve 18 — 336.6 mm (13.25 in.)
    Volume — 15860 cm³ (970 in.³)

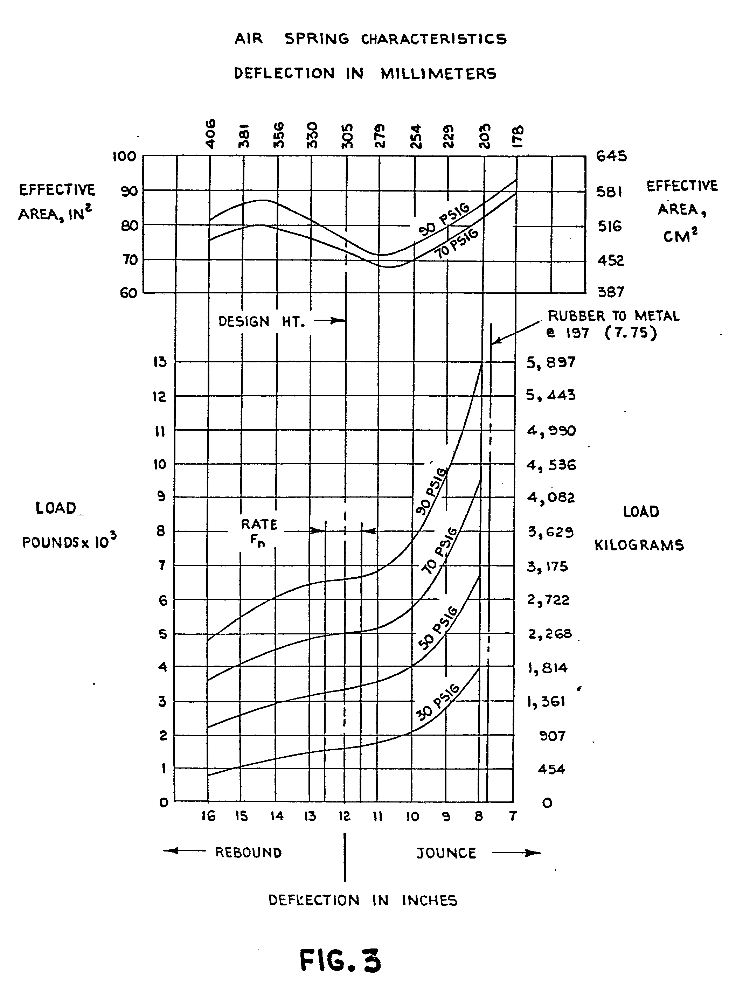

The effect of jounce in terms of effective area and deflection for the air spring of the example is illustrated in Figure 3 to which reference is now made. At the upper portion of Figure 3 there is shown the relationship between the effective area of the air spring sleeve and deflection with 12 inches (304.8 mm) being the design height. Under jounce, the effective area actually decreases for about 2 (50.8 mm) inches and then increases significantly. At rebound, the effective area increases to dampen the oscillation of the air spring.

In the lower portion of Figure 3 there are illustrated curves showing the relationship between load on the air spring and deflection. At the design height, the spring rate is positive but only slightly so compared with the spring rate at higher jounce deflections. Note that the spring rate around the design height is relatively constant regardless of the degree to which the spring is loaded.

The following data was obtained from tests on an air spring according to the invention:

| Spring Pressure | | Spring rate at design height | | FN | Load/ spring rate |
|---|---|---|---|---|---|
| 30 psi | (207 KPA) | 200 lb/in | (35 KN/M) | 66 CPM | 7.5 in (183 mm) |
| 50 psi | (245 KPA) | 240 lb/in | (42 KN/M) | 50 CPM | 14.1 in (344 mm) |
| 70 psi | (43 KPA) | 260 lb/in | (45.5 KN/M) | 43 CPM | 19.2 in (468 mm) |
| 90 psi | (621 KPA) | 130 lb/in | (22.8 KN/M) | 26 CPM | 51 in (1243 mm) |

In an air spring constructed according to the invention, the reservoir 34 is significant in maintaining a relatively constant volume under jounce conditions. Desirably, the reservoir has a capacity in excess of 100 cu. in. (1639 cm$^3$) and preferably about 120 cu. in. (1965 cu. cm). The total volume of the air spring including the reservoir is preferably in the range of 850 cu. in. (1390 cu cm) to 1500 cu. in. (24600 cu. cm.), desirably at about 1000 cu. in. (16,390 cu. cm.). Thus, the reservoir adds significant volume to the air spring to assist in reaching the relatively small spring rate and the relatively large load to spring rate ratios.

The air spring according to the invention provides a ride that is very smooth over rough roads so that very little shock is transmitted to the vehicle frame when the vehicle hits a bump. The invention is particularly adapted to heavy loads such as carried by vehicles in the trucking industry. The smooth ride is the result of a low spring rate at design height. This spring rate has not been heretofore achievable in other designs at the higher loads.

Reasonable variation and modification are possible within the scope of the foregoing disclosure and drawings without departing from the spirit of the invention which is defined in the accompanying claims.

**Claims**

1. An air spring of the rolling lobe type, wherein a hollow elastic sleeve (18) is maintained at a substantially constant diameter at a design load under jounce and rebound having means (20) for securing an upper end of the sleeve (18) to a vehicle frame (14); a hollow piston (32) adapted to be secured to a vehicle axle, to mount a lower end of the sleeve (18) and to provide an outer surface (42) on which the lower end of the sleeve (18) rolls during jounce and rebound, the hollow piston (32) having an axis (54) along which the piston (32) moves during jounce and rebound of the spring; means (30, 34) for securing the sleeve (18) to an upper portion of the piston (32); and means (40) to provide open communication between the interior of the hollow sleeve (18) and the interior of the hollow piston (32) whereby the interior of the piston (32) provides a reservoir (34) for the air spring, the exterior surface of the piston (32) having an outwardly-extending top surface (42) joining a relatively large radius downwardly curved surface (43) on which the lobe of the hollow sleeve rests during normal loading, and an inverted frusto conical surface (44) extending downwardly from the downwardly curved surface to provide an area of increasingly reduced diameter for the rolling lobe of the hollow sleeve during jounce, characterised in that: the angle of an element of the frusto-conical surface (44) with respect to the axis (54) of the piston is in the range of 20—23°; the design height of the air spring is in the range of 28—33 cm.; the piston height is substantially 13 cm.; and the volume of the piston and sleeve under load is in the range of 13,900—24,600 cu. cm., so that the spring rate is in the range of 17.5 KN/m—52.5 KN/m at loads above 2268 kg.

2. An air spring according to claim 1 characterised in that the piston (32) further comprises an outwardly flared surface (48) adjoining the bottom of the frusto-conical surface (44) and providing an area of larger diameter to increase the effective area of the air spring and retard further deflection thereof as the rolling lobe in deflection reaches the outwardly flared surface (48).

3. An air spring according to claim 1 or 2 characterised in that a plate (38) is secured to an upper portion of the piston (32) and an opening (40) in the plate (38) provides communication between the interior of the hollow sleeve (18) and the interior of the piston (32), and a resilient bumper (22) is secured to the upper sleeve end securing means (20) and adapted to strike the plate (38) at extreme deflection positions of the air spring.

4. An air spring according to any preceding claim characterised in that the volume of the piston reservoir (34) is in excess of 1639 cu. cm.

5. An air spring according to claim 4 characterised in that the volume of the interior of the piston and hollow spring under load is substantially 16.390 cu. cm.

6. An air spring according to claim 5 characterised in that the piston shape, the volume of the hollow sleeve (18) and the piston (32) are such that the ratio of load to spring rate for the air spring is above 50.8 cm. for loads in excess of 2268 kg.

7. An air spring according to any preceding claim characterised in that the piston diameter at the upper portion thereof is in the range 24 to 28 cm and the hollow elastic sleeve (18) has a maximum diameter in excess of 30 cm.

8. An air spring according to claim 7 characterised in that the piston diameter at the upper portion thereof is substantially 25 cm. and the hollow elastic sleeve (18) has a maximum diameter in the range 33 to 33.7 cm.

9. An air piston according to any preceeding claim characterised in that the design height of the air spring is substantially 30 cm.

## Revendications

1. Ressort pneumatique du type à lobe roulant, dans lequel un manchon élastique creux (18) est maintenu à un diamètre sensiblement constant sous l'action d'une charge nominale, sous l'action de forces de chaots et de rebond, comportant un dispositif (20) de fixation de l'extrémité supérieure du manchon (18) à un châssis (14) de véhicule, un piston creux (32) destiné à être fixé sur un essieu de véhicule afin qu'il porte une extrémité inférieure du manchon (18) et qu'il délimite une surface externe (42) sur laquelle l'extrémité inférieure de manchon (18) roule sous l'action des forces de chaots et de rebond, le piston creux (32) ayant un axe (54) le long duquel le piston (32) se déplace sous l'action des forces de chaots et de rebond appliquées au ressort, un dispositif (30, 34) de fixation du manchon (18) à une partie supérieure du piston (32), et un dispositif (40) assurant la communication libre entre l'intérieur du manchon creux (18) et l'intérieur du piston creux (32) de manière que l'intérieur du piston (32) forme un réservoir (34) pour le ressort pneumatique, la surface externe du piston (32) ayant une face supérieure (42) dirigée vers l'extérieur et se raccordant à une surface courbée vers la bas (43) et de rayon relativement grand sur laquelle le lobe du manchon creux repose sous l'action d'une charge nominale, et une surface tronconique retournée (44) descendant sous la surface courbée vers le bas afin qu'elle forme une région de diamètre de plus en plus faible pour le roulement du lobe du manchon creux sous l'action des chaots, caractérisé en ce que l'angle d'un élément de la surface tronconique (44) avec l'axe (54) du piston est compris entre 20 et 23 degrés, la hauteur nominale du ressort pneumatique est comprise entre 28 et 33 cm, la hauteur du piston est sensiblement égale à 13 cm, et le volume du piston et du manchon, sous l'application de la charge, est compris entre 13 900 et 24 600 cm$^3$, si bien que la constante élastique est comprise entre 17,5 et 52,5 kN/m sous une charge supérieure à 2 268 kg.

2. Ressort pneumatique selon la revendication 1, caractérisé en ce que le piston (32) comporte en outre une surface évasée vers l'extérieur (48) adjacente à la partie inférieure de la surface tronconique (44) et formant une région de diamètre accru afin que la section efficace du ressort pneumatique soit accrue et retarde un fléchissement plus important de celui-ci lorsque le lobe roulant, en fléchissant atteint la surface qui s'évase vers l'extérieur (48).

3. Ressort pneumatique selon l'une des revendications 1 et 2, caractérisée en ce qu'une plaque (38) est fixée à une partie supérieure du piston (32) et un orifice (40) formé dans la plaque (38) assure la communication entre l'intérieur du manchon creux (18) et l'intérieur du piston (32), et un amortisseur élastique (22) est fixé au dispositif (20) de fixation de l'extrémité supérieure du manchon et est destiné à frapper la plaque (38) pour les positions extrêmes de fléchissement du ressort pneumatique.

4. Ressort pneumatique selon l'une quelconque des revendications précédentes, caractérisé en ce que le volume du réservoir (34) du piston est supérieur à 1 639 cm$^3$.

5. Ressort pneumatique selon la revendication 4, caractérisé en ce que le volume de l'intérieur du piston et du ressort creux, sous l'action de la charge, est sensiblement égal à 16 390 cm$^3$.

6. Ressort pneumatique selon la revendication 5, caractérisé en ce que la configuration du piston, le volume du manchon creux (18) et le piston (32) sont tels que le rapport de la charge à la constante élastique de ce ressort pneumatique est supérieur à 50,8 cm pour des charges dépassant 2268 kg.

7. Ressort pneumatique selon l'une quelconque des revendications précédentes, caractérisé en ce que la diamètre du piston à la partie supérieure de celui-ci est compris entre 24 et 28 cm et le manchon élastique creux (18) a un diamètre maximal supérieur à 30 cm.

8. Ressort pneumatique selon la revendication 7, caractérisé en ce que le diamètre du piston, à sa partie supérieure, est sensiblement égal à 25 cm et le manchon élastique creux (18) a un diamètre maximal compris entre 33 et 33,7 cm.

9. Piston pneumatique selon l'une quelconque des revendications précédentes, caractérisé en ce que la hauteur nominale du ressort pneumatique est sensiblement égale à 30 cm.

## Patentansprüche

1. Rollbalg-Luftfeder, mit einer hohlen elastischen Hülse (18), die unter Stoss- und Rückstossbeanspruchungen bei der veranschlagten Belastung einen im wesentlichen konstanten Durchmesser beibehält und eine Einrichtung (20) aufweist, um ein oberes Ende der Hülse (18) an einem Fahrzeugrahmen (14) zu befestigen; einem an einer Fahrzeugachse befestigbaren hohlen Kolben (32) zur Halterung eines unteren Endes der Hülse (18) und zur Schaffung einer äusseren Oberfläche (42), an der das untere Ende der Hülse (18) während der Stoss- und Rückstossbeanspruchung abrollt, wobei der hohle Kolben (32) eine Achse (54) hat, längs der sich der Kolben (32) während der Stoss- und Rückstossbeanspruchung der Feder bewegt; einer Einrichtung (30, 34) zur Befestigung der Hülse (18) an einem oberen Abschnitt des Kolbens (32); und einer Einrichtung (40) zur Schaffung einer offenen Verbindung zwischen dem Innenraum der hohlen Hülse (18) und dem Innenraum des hohlen Kolbens (32), so dass der Innenraum des Kolbens (32) ein Reservoir (34) für die Luftfeder vorsieht, wobei die äussere Oberfläche des Kolbens (32) eine nach aussen sich erstreckende obere Fläche (42), an der sich eine nach unten gekrümmte Fläche (43) mit relativ grossem Radius anschliesst, auf der der Balg der hohlen Hülse während einer normalen Belastung aufliegt, und eine umgekehrt kegelstumpfförmige Fläche (44) umfasst, die sich von der nach unten gekrümmten Fläche nach unten erstreckt und einen Bereich mit stetig abnehmendem Durchmesser für den Rollbalg der hohlen Hülse während der Stossbeanspruchung vorsieht, dadurch gekennzeichnet, dass der Winkel eines Elementes der kegelstumpfförmigen Fläche (44) in Bezug auf die Achse (54) des Kolbens im Bereich von 20—23° liegt; die veranschlagte Höhe der Luftfeder im Bereich von 28—33 cm liegt; die Kolbenhöhe im wesentlichen 13 cm beträgt; und das Volumen von Kolben und Hülse unter Belastung im Bereich von 13900—24600 cm³ liegt, so dass bei einer Belastung oberhalb 2268 kg die Federsteifigkeit im Bereich von 17,5 KN/m—52,5 KN/m liegt.

2. Luftfeder nach Anspruch 1, dadurch gekennzeichnet, dass der Kolben (32) weiter eine nach aussen sich erweiternde Fläche (48) aufweist, die sich an dem unteren Ende der kegelstumpfförmigen Fläche (44) anschliesst und eine Zone grösseren Durchmessers vorsieht, um die Wirkfläche der Luftfeder zu vergrössern und deren weiteres Durchfedern zu behindern, wenn der Rollbalg beim Nachgeben die nach aussen sich erweiternde Fläche (48) erreicht.

3. Luftfeder nach Anspruch 1 oder 2, dadurch gekennzeichnet, dass an dem oberen Abschnitt des Kolbens (32) eine Platte (38) befestigt ist und eine Öffnung (40) in der Platte (38) eine Verbindung zwischen dem Innenraum der hohlen Hülse (18) und dem Innenraum des Kolbens (32) vorsieht, und dass an der Befestigungseinrichtung (20) für das obere Hülsenende ein nachgiebiges Puffer (22) befestigt ist, das auf die Platte (38) bei den extremen Durchfederungsstellungen der Luftfeder auftrifft.

4. Luftfeder nach einem der vorhergehenden Ansprüche, dadurch gekennzeichnet, dass das Volumen des Kolbenreservoirs (34) mehr als 1639 cm³ beträgt.

5. Luftfeder nach Anspruch 4, dadurch gekennzeichnet, dass das Volumen des Innenraumes von Kolben und hohler Feder unter Belastung im wesentlichen 16390 cm³ beträgt.

6. Luftfeder nach Anspruch 5, dadurch gekennzeichnet, dass die Formgebung des Kolbens sowie das Volumen der hohlen Hülse (18) und des Kolbens (32) so sind, dass das Verhältnis der Last zur Federsteifigkeit der Luftfeder oberhalb 50,8 cm bei Belastungen von mehr als 2268 kg liegt.

7. Luftfeder nach einem der vorhergehenden Ansprüche, dadurch gekennzeichnet, dass der Kolbendurchmesser an seinem oberen Abschnitt im Bereich von 24 bis 28 cm liegt und dass die hohle elastische Hülse (18) einen maximalen Durchmesser von mehr als 30 cm hat.

8. Luftfeder nach Anspruch 7, dadurch gekennzeichnet, dass der Kolbendurchmesser an seinem oberen Abschnitt im wesentlichen 25 cm beträgt und dass die hohle elastiche Hülse (18) einen maximalen Durchmesser im Bereich von 33 bis 33,7 cm hat.

9. Luftkolben nach einem der vorhergehenden Ansprüche, dadurch gekennzeichnet, dass die veranschlagte Höhe der Luftfeder im wesentlichen 30 cm beträgt.

FIG.1

FIG.2

AIR SPRING CHARACTERISTICS

DEFLECTION IN MILLIMETERS

FIG. 3